# EUROPEAN PATENT APPLICATION

(11) **EP 2 362 499 A1**
(43) Date of publication of application: **31.08.2011**
(21) Application number: 11001224.2
(22) Date of filing: 15.02.2011
(51) Int. Cl.: H01R 13/629, H01R 13/639, B60L 11/18, H01R 13/627, H01R 13/512

(54) **Charging connector**

(30) Priority: 19.02.2010 JP 2010034832; 09.03.2010 JP 2010051780
(71) Applicant: Sumitomo Wiring Systems, Ltd., Yokkaichi-city, Mie 510-8503 (JP)
(72) Inventor: Osawa, Kiyoshi, Yokkaichi-City Mie 510-8503 (JP); Ichio, Toshifumi, Yokkaichi-City Mie 510-8503 (JP); Takada, Akinori, Yokkaichi-City Mie 510-8503 (JP)
(74) Representative: Müller-Boré & Partner Patentanwälte

(57) **Abstract**

An object of the present invention is to protect an unlocking portion when a charging connector is dropped by mistake.

A charging connector 10 of the present invention to be connected to a vehicle-side connector 50 connected to a battery in a vehicle when the battery is charged is provided with a connector main body 11 including a connector fitting portion 13 connectable to the vehicle-side connector 50, a lever 14 accommodated in the connector main body 11 and adapted to hold the vehicle-side connector 50 and the connector fitting portion 13 in a connected state by being engaged with a lock projection 55 provided on the vehicle-side connector 50, an unlocking portion 14B provided in the lever 14 and capable of canceling a locked state of a lock portion 31 and the lock projection 55, and an unlocking-portion accommodating portion 25 formed at a position of the connector main body 11 corresponding to the unlocking portion 14B and including a pair of side walls 25A arranged to face opposite side surface portions of a pressable portion 14D to be pressed at the time of an unlocking operation.

## Description

### Charging Connector

The present invention relates to a charging connector connectable to a vehicle-side connector connected to a battery provided in a vehicle when the battery is charged.

A charging connector of this type is, for example, known from Japanese Unexamined Patent Publication No. H09-161882. This connector includes a connector fitting portion connectable to a vehicle-side connector, and this connector fitting portion is mounted in a front end opening of a case body. The charging connector also includes a lever extending forward from the interior of the case body, and the charging connector and the vehicle-side connector are held in a connected state by the engagement of a lock portion provided at a front end portion of this lever with a lockable portion provided on the vehicle-side connector. Further, an unlocking portion capable of canceling a locked state of the lock portion and the lockable portion is provided at a rear end portion of the lever.

However, since the unlocking portion is exposed to a lateral side in the above construction, it is likely to collide with the ground, for example, if the charging connector is dropped by mistake at the time of connection and separation. Thus, the unlocking portion is subject to an impact. At this time, if the unlocking portion cannot bear the impact, it results in breakage or the like of the unlocking portion.

The present invention was developed in view of the above situation and an object thereof is to protect an unlocking portion when a charging connector is dropped by mistake.

This object is solved according to the invention by the features of the independent claims. Preferred embodiments of the invention are subject of the dependent claims.

The present invention is directed to a charging connector connectable to a vehicle-side connector connected to a battery in a vehicle when the battery is charged, comprising:
a case body including a connector fitting portion connectable to the vehicle-side connector,
a lever at least partly accommodated in the case body and adapted to hold the vehicle-side connector and the connector fitting portion in a connected state by being engaged with a lockable portion provided on the vehicle-side connector,
an unlocking portion provided in the lever and capable of canceling a locked state of a lock portion and the lockable portion, and
an unlocking-portion accommodating portion formed at a position of the case body substantially corresponding to the unlocking portion and including a pair of side walls arranged to substantially face opposite side surface portions of a pressable portion to be pressed at the time of an unlocking operation.

According to this construction, the unlocking portion can be protected by the both side walls of the unlocking-portion accommodating portion when the charging connector is dropped by mistake.

The present invention is preferably embodied to have the following constructions.

The unlocking-portion accommodating portion may include a front wall arranged to face a front surface portion of the pressable portion.

The front wall may be connected to front end portions of the pair of side walls.

According to this construction, the unlocking portion can be protected by the front wall of the unlocking-portion accommodating portion when the charging connector is dropped by mistake. Further, since the front end portions of the both side walls particularly are connected by the front wall, the strength of the entire unlocking-portion accommodating portion can be increased.

The unlocking-portion accommodating portion may be in the form of a rib projecting from an outer surface of the case body.

The pressable portion of the unlocking portion may project from the outer surface of the case body to such an extent as not to reach beyond an outer edge of the unlocking-portion accommodating portion.

According to this construction, the unlocking operation is more easily performed since the pressable portion of the unlocking portion can be provided to project from the outer surface of the case body to such an extent as not to reach beyond the outer edge of the unlocking-portion accommodating portion.

The unlocking-portion accommodating portion may be an inner peripheral wall of a hole formed in an outer surface of the case body.

The unlocking portion may face the back side of the case body through the hole.

According to this construction, the design of the external appearance of the charging connector can be improved since the outer contour line of the case body can be smooth.

The case body may include a connector main body substantially extending in a connecting direction with the vehicle-side connector and a grip extending from a rear end portion of the connector main body in a direction crossing the connecting direction.

The unlocking portion may be provided near a boundary between the connector main body and the grip.

According to this construction, the pressable portion of the unlocking portion is more easily pressed by a thumb when the grip is held by hand.

The lever may include an arm extending from the interior of the case body to the front end portion of the connector fitting portion and adapted to hold the vehicle-side connector and the connector fitting portion in a connected state.

The lever may be displaceable in a seesaw manner with a lever pivot portion arranged at an intermediate position of the arm as a pivot point.

The lock portion is displaceable between a locking position where the lock portion and the lockable portion provided on the vehicle-side connector are in a locked state and an unlocking position where the locked state is canceled.

The lever at the locking position is in contact with a shock absorbing member.

According to the above, it is possible to protect an unlocking portion when a charging connector is dropped by mistake.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a side view showing a charging connector according to a first embodiment,
FIG. 2 is a front view showing the charging connector,
FIG. 3 is a plan view of the charging connector,
FIG. 4 is a rear view of the charging connector,
FIG. 5 is a perspective view of the charging connector when viewed obliquely from behind,
FIG. 6 is a longitudinal section showing a state before a vehicle-side connector and the charging connector are connected,
FIG. 7 is a longitudinal section showing an intermediate state while the vehicle-side connector and the charging connector are being connected,
FIG. 8 is a longitudinal section showing a state after the vehicle-side connector and the charging connector are connected, and
FIG. 9 is a longitudinal section showing a charging connector according to a second embodiment.

### <First Embodiment>

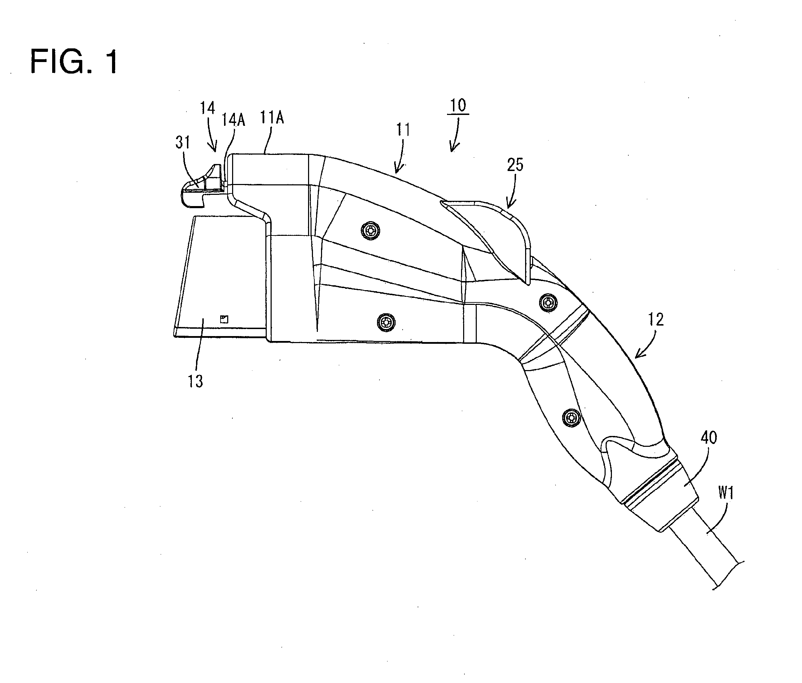

A first embodiment of the present invention is described with reference to FIGS. 1 to 8. A charging connector 10 of this embodiment particularly is connectable with a vehicle-side connector 50. It should be noted that in the following a front side or a forward direction is referred to a connection direction of the charging connector 10 with the vehicle-side connector 50. The charging connector 10 substantially is gun-shaped as a whole and/or formed with a connector main body 11 constituting or forming a front portion (particularly substantially a front half) and a grip 12 extending obliquely downward from a rear end portion of this connector main body 11 as shown in FIG. 1. The connector main body 11 and the grip 12 particularly are both made of synthetic resin and/or integrally or unitarily molded. A substantially tubular connector fitting portion 13 substantially projecting forward is provided on or at the front surface of the connector main body 11. Further, a lever 14 is provided on or to the connector main body 11 (particularly at least partly accommodated at an upper side of the interior of the connector main body 11, and a front or distal end portion thereof projects forward from the connector main body 11 (particularly the front edge of the upper surface of the connector main body 11) to be exposed to the outside. Note that a "case body" particularly corresponds to the connector main body 11 and the grip 12.

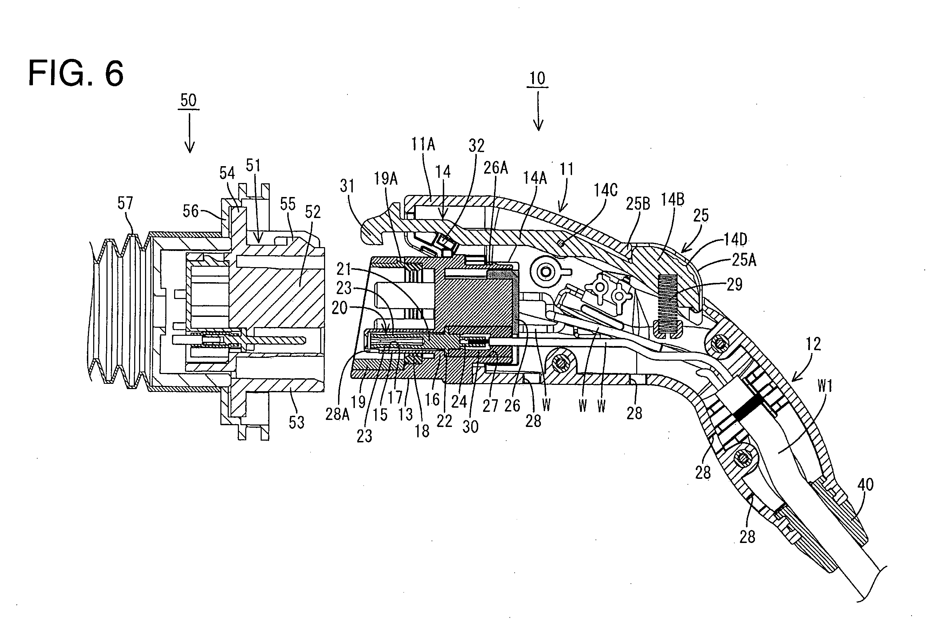

As shown in FIG. 6, the connector fitting portion 13 is formed as a separate member from the connector main body 11, and to be fixed to the connector main body 11 by an unillustrated locking means. One or more, particularly a plurality of (particularly substantially cylindrical or tubular) terminal accommodating portions 15 are provided in the connector fitting portion 13. These one or more terminal accommodating portions 15 substantially project forward from a back wall 16 of the connector fitting portion 13. One or more cavities 17 for at least partly accommodating one or more respective terminal fittings 20 are formed in the terminal accommodating portions 15.

The (particularly each) cavity 17 is open at (particularly the rear surface of the back wall 16 of) the connector fitting portion 13. On the other hand, the terminal fitting 20 is at least partly insertable forward into the cavity 17 particularly through a rear end opening and/or prevented from moving any further forward by the contact of a flange portion 22 at least partly circumferentially provided on the outer circumferential surface of the terminal fitting 20 with the rear end opening edge of the cavity 17. An insertion hole, through which a vehicle-side terminal 60 to be described later is at least partly insertable, is formed to penetrate through a front wall 17A of the cavity 17. Further, at least one water drain hole 28A is formed to penetrate through a lower side of the front end of the inner wall of the cavity 17. Water having entered the cavity 17 is or may be drained to the outside through the water drain hole 28A.

A cylindrical rubber ring 18 (as a preferred resilient ring) is mounted along the inner circumferential surface of the connector fitting portion 13 in the connector fitting portion 13, and a holder 19 for retaining the rubber ring 18 is mounted before the rubber ring 18. The holder 19 particularly has the substantially same cylindrical shape as the rubber ring 18 and is to be substantially mounted along the inner circumferential surface of the connector fitting portion 13A. The holder 19 includes at least one locking portion 19A engageable with a locking hole or recess of the connector fitting portion 13 particularly from an inner side. This locking portion 19A is to be engaged with the locking hole to retain the holder 19 in the connector fitting portion 13.

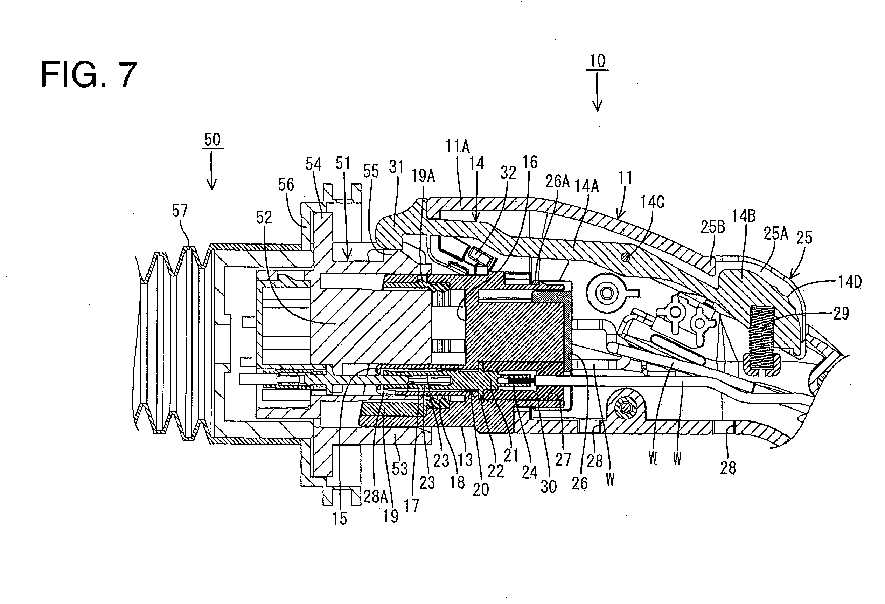

A mounting portion for the holder 19 on the inner circumferential surface of the connector fitting portion 13 particularly has a larger diameter than the back side of the rubber ring 18. By mounting the holder 19, the inner circumferential surface of the holder 19 and the inner circumferential surface of the connector fitting portion 13 substantially behind the rubber ring 18 are aligned to be substantially flush. One or more lip portions of the rubber ring 18 project radially inwardly of the inner circumferential surface of the holder 19. On the other hand, the vehicle-side connector 50 includes a housing 51 connectable to the charging connector 10 as shown in FIG. 7. The housing 51 is made e.g. of synthetic resin and includes a housing main body 52 at least partly fittable or insertable into the connector fitting portion 13. Thus, when the housing main body 52 is or may be at least partly fitted into the connector fitting portion 13, the outer circumferential surface thereof comes into close contact (particularly with the lip portions of) the rubber ring 18, thereby providing waterproofing between the two connectors 10 and 50.

A fitting tube portion 53 is circumferentially provided on or at (particularly the outer circumferential surface of) the housing main body 52. This fitting tube portion 53 substantially projects forward from a mounting plate 54, so that the connector fitting portion 13 is at least partly fittable between the housing main body 52 and the fitting tube portion 53. A lock projection 55 is provided on (particularly the upper surface of) the fitting tube portion 53. This lock projection 55 is engageable in a connecting direction with a lock portion 31 provided at (particularly a front end portion of) the lever 14. Accordingly, when the two connectors 10, 50 are connected, the lock portion 31 is engaged with the lock projection 55, whereby the two connectors 10, 50 are held in a connected state. Note that the mounting plate 54 is to be placed on a mounting opening portion 56 provided on a vehicle body and bolted, and a bellows-like grommet 57 substantially extending backward is to be mounted on (particularly a rear part of) the mounting opening portion 56.

Each terminal fitting 20 includes a terminal main body 21 with one or more, particularly a plurality of contact pieces 23. Particularly, the plurality of contact pieces 23 are formed by forming one or more, particularly a plurality of slits intermittently in a circumferential direction. The slits are formed to substantially extend backward from the front end opening edge of the terminal main body 21 having an open front end. The terminal of this type is called a slotted terminal or the like in some cases.

A wire connection portion (particularly comprising at least one cylindrical barrel portion 24 having an open rear end) is formed behind or adjacent to the terminal main body 21. An exposed core at an end of a wire W is to be connected to the wire connection portion particularly by being at least partly accommodated in the barrel portion 24. By crimping or bending or folding the barrel portion 24, the core of the wire W particularly is electrically conductively connected to the barrel portion 24. The wire W substantially extends backward from the barrel portion 24 and is drawn out to the outside through the interiors of the connector main body 11 and the grip 12.

One or more resilient or rubber plugs 30 are to be at least partly accommodated behind the flange portions 22, and a back retainer 26 for retaining these one or more resilient or rubber plugs 30 is provided behind the resilient or rubber plugs 30. Each resilient or rubber plug 30 is to be at least partly accommodated in a resilient-or rubber-plug accommodating portion 27 substantially arranged behind and/or coaxially with the terminal accommodating portion 15. The back retainer 26 includes one or more locking pieces 26A engageable with (particularly projections formed on the upper surfaces of) the rubber-plug accommodating portions 27. A backward movement of the back retainer 26 and backward movements of the resilient or rubber plugs 30 and the flange portions 22 are prevented by these locking pieces 26A.

One or more, particularly a plurality of wires W substantially extend backward in the connector main body 11 in correspondence with one or more, particularly a plurality of terminal fittings 20, and particularly these wires W are bundled into one cable W1 by being at least partly covered by an outer sheath in the grip 12. The cable W1 is fixed by a cable grip ring (not shown) or the like in the grip 12 and further fixed by a bush 40 at or near (particularly a rear end portion of) the grip 12.

Since the bush 40 is held substantially in close contact with the inner circumferential surface of the rear end opening of the grip 12 and the outer circumferential surface of the cable W1, water is prevented from entering the interior of the grip 12 through the rear end of the grip 12. Since one or more, particularly a plurality of water drain holes 28 are formed in or near the lower surfaces of the connector main body 11 and the grip 12, water can be allowed to escape to the outside through these water drain holes 28 even if it enters the interiors of the connector main body 11 and the grip 12.

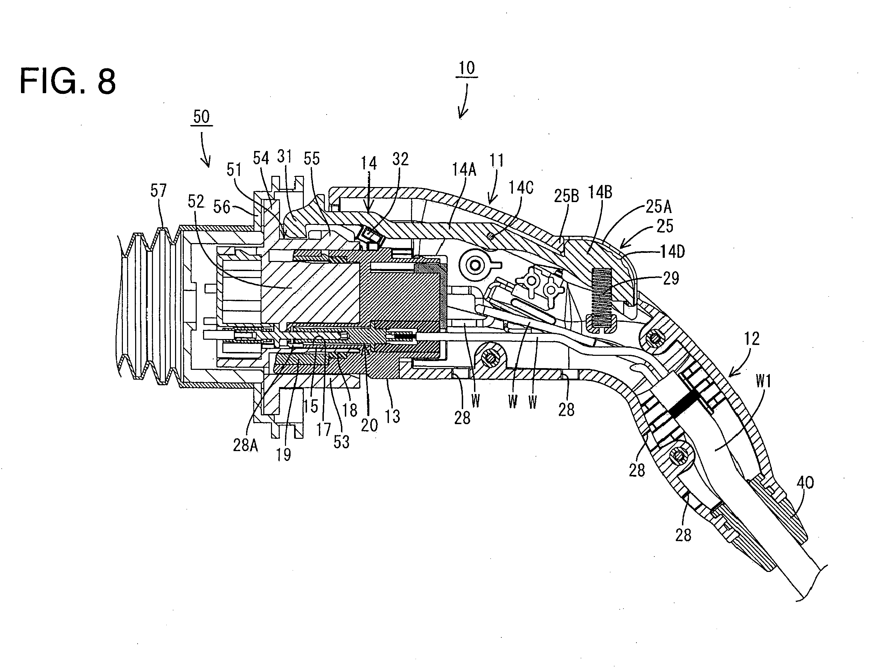

The lever 14 includes an arm 14A substantially extending in forward and backward directions, and an unlocking portion 14B is provided at (particularly a rear end portion of) the arm 14A. A lever pivot portion 14C is provided in an intermediate part (particularly substantially in a central part) of the arm 14A, and both front and rear end portions of the arm 14A particularly can be inclined or displaced in a seesaw manner with this lever pivot portion as a center or pivot point. A coil spring 29 (as a particular biasing member) is mounted in a compressed state below the unlocking portion 14B. This coil spring 29 pushes up or biases the rear end portion of the arm 14A, whereby the lock portion 31 is constantly biased toward a locking position shown in FIG. 6 (FIG. 8). On the other hand, when the unlocking portion 14B is pushed down or displaced, the lock portion 31 is relatively pushed up to be displaced towards or to an unlocking position shown in FIG. 7.

As shown in FIG. 6, the lever 14 at the locking position is in contact with a shock absorbing pad 32 provided at (particularly an upper side of) the connector fitting portion 13 in the connector main body 11. Thus, when the unlocking portion 14B is released at the unlocking position, the lever 14 swiftly moves from the unlocking position towards or to the locking position due to a biasing or spring force of the coil spring 29, but an impact is absorbed when the arm 14A collides with the shock absorbing pad 32 and a movement of the lever 14 substantially is stopped at the locking position.

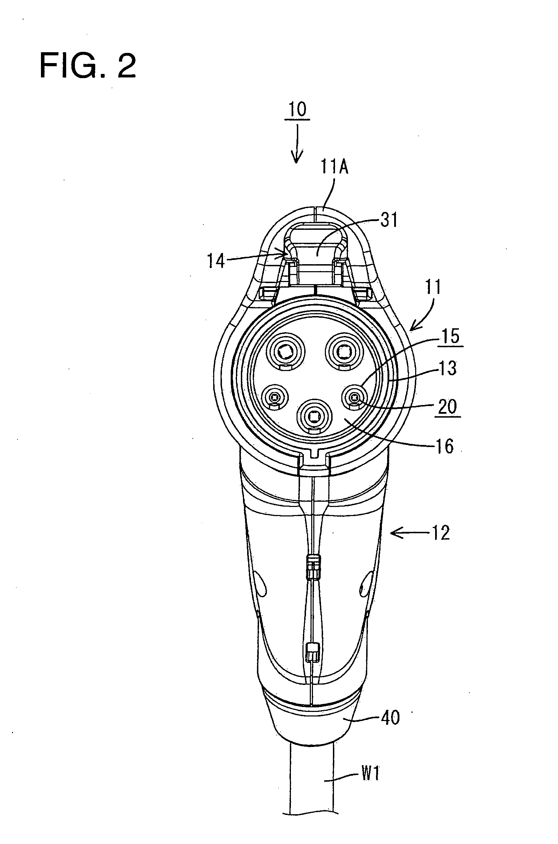

The connector main body 11 is formed to bulge outward or upward at a position substantially corresponding to the lever 14 as shown in FIG. 2, and a protective wall 11 A is formed at or near (particularly a front end portion of) this bulging portion. As shown in FIG. 1, the protective wall 11 A substantially projects forward from the opening edge of the connector main body 11. A distal or front end side of the arm 14A of the lever 14 is at least partly covered by the protective wall 11 A while leaving only the lock portion 31 substantially exposed. Thus, damage of the arm 14A can be restricted when the charging connector 10 is dropped by mistake.

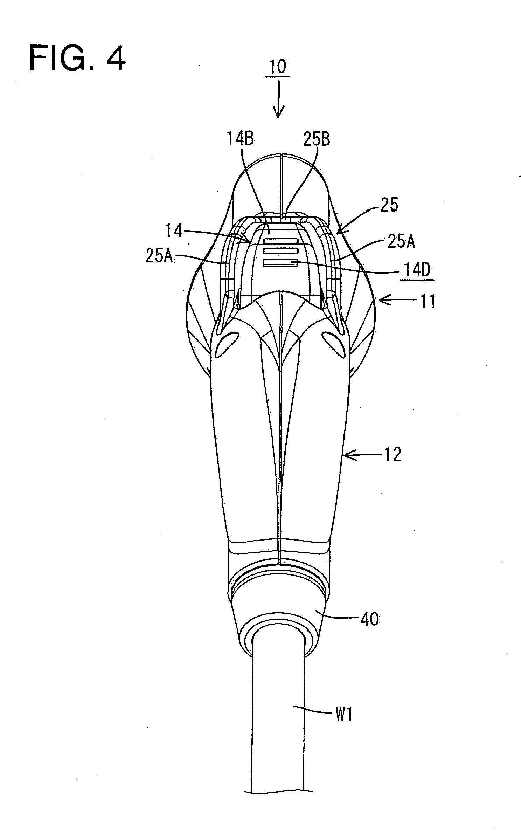

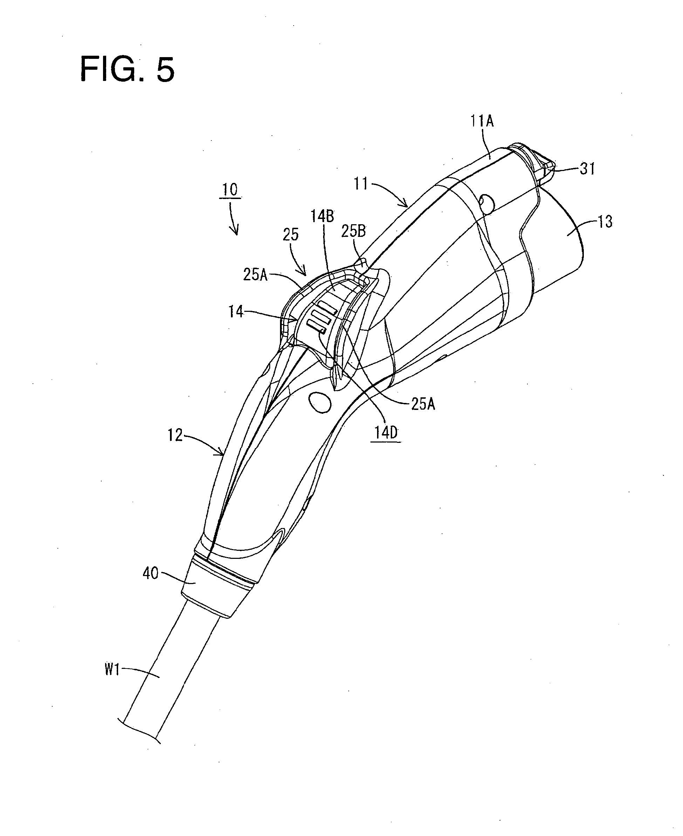

As shown in FIG. 5, an unlocking-portion accommodating portion 25 for at least partly accommodating the unlocking portion 14B (particularly while substantially surrounding it) is provided at or near a rear part of the connector main body 11. The unlocking-portion accommodating portion 25 makes an opening in the upper surface of the rear part of the connector main body 11. This unlocking-portion accommodating portion 25 is provided in a part of the connector main body 11 which allows the inside and the outside of the connector main body 11 to communicate. The unlocking-portion accommodating portion 25 particularly is (also) provided near a boundary between the connector main body 11 and the grip 12. In this embodiment, the unlocking-portion accommodating portion 25 (also) makes an opening in (particularly an upper inclined surface of) the connector main body 11 as shown in FIG. 1 and an opening in the rear side of the charging connector 10 as shown in FIG. 4. Therefore, the unlocking portion 14B particularly is arranged to substantially face the back side of the charging connector 10 through the unlocking-portion accommodating portion 25.

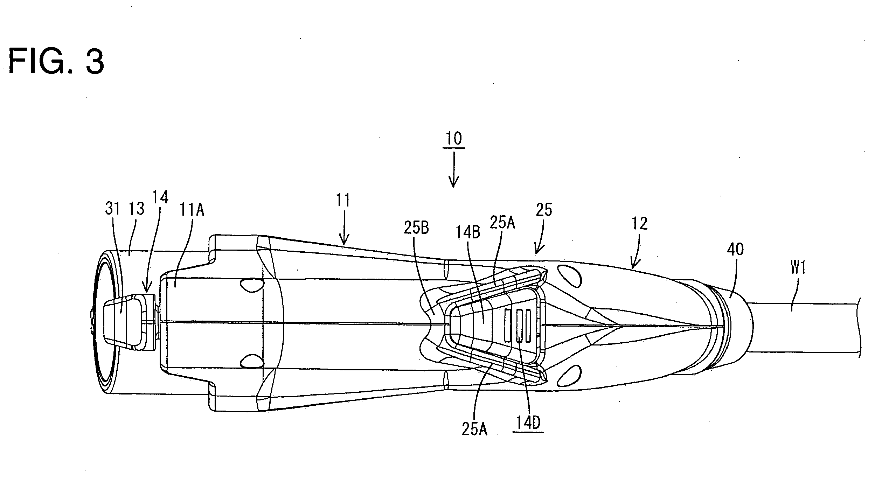

As shown in FIG. 3, the unlocking-portion accommodating portion 25 includes a pair of side walls 25A arranged to substantially face opposite side surface portions of a pressable portion 14D to be pressed at the time of an unlocking operation, and/or a front wall 25B arranged to substantially face a front surface portion of the pressable portion 14D. Front end portions of the both side walls 25A particularly are connected by the front wall 25B. Thus, the unlocking-portion accommodating portion 25 particularly is substantially gate-shaped as a whole and open backward. Further, the both side walls 25A are arranged in proximity to the substantially opposite side surface portions of the unlocking portion 14B, and the front wall 25B is arranged in proximity to the front surface portion of the unlocking portion 14B.

As shown in FIG. 5, the upper edges of the both side walls 25A and that of the front wall 25B are set to be higher than the pressable portion 14D of the unlocking portion 14B at the locking position. Thus, the entire unlocking portion 14B is so arranged as not to be exposed to lateral and/or front sides at the locking position by the unlocking-portion accommodating portion 25 as shown in FIG. 6. Further, the unlocking-portion accommodating portion 25 particularly substantially is in the form of a rib projecting upward or outward from the upper or outer surface of the connector main body 10. Accordingly, the pressable portion 14D of the unlocking portion 14B projects upward or outward from the upper or outer inclined surface of the connector main body 11. Thus, when the grip 12 is held by hand, a thumb can be at least partly inserted between the both side walls 25A through the rear end opening of the unlocking-portion accommodating portion 25 and directly press the pressable portion 14D. Therefore, the unlocking operation is more easily performed. Further, since the both side walls 25A and the front wall 25B particularly are integrally or unitarily molded, the strength of the entire unlocking-portion accommodating portion 25 is increased. Thus, when the charging connector 10 is dropped by mistake, damage of the unlocking-portion accommodating portion 25 due to an impact given thereto is restricted, with the result that the unlocking portion 14B can be protected.

Next, functions of this embodiment constructed as described above are described. When the two connectors 10, 50 are connected in a state of FIG. 6, the lock portion 31 moves onto the lock projection 55 as shown in FIG. 7 and the lever 14 at the locking position is inclined toward or to the unlocking position. When the two connectors 10, 50 are further connected, they reach a connected state as shown in FIG. 8. Simultaneously with this, the lock portion 31 moves beyond or past the lock projection 55, the lever 14 resiliently at least partly returns to reach the locking position, and the lock portion 31 and the lock projection 55 are engaged in the connecting direction. In this way, the two connectors 10, 50 are locked in the connected state.

When the pressable portion 14D of the unlocking portion 14B is pressed e.g. by a thumb or finger with the grip 12 held by hand, the lever 14 is inclined from the locking position towards or to the unlocking position again to disengage the lock portion 31 and the lock projection 55. By pulling the two connectors 10, 50 apart from each other, the two connectors 10, 50 can be separated.

As described above, the charging connector 10 may be dropped by mistake, for example, at the time of connection and separation. According to this embodiment, even in such a case, the unlocking portion 14B does not collide with the ground and the unlocking-portion accommodating portion 25 collides with the ground, wherefore damage of the unlocking portion 14B can be prevented. Thus, the unlocking portion 14B can be protected. Since this unlocking-portion accommodating portion 25 particularly is substantially gate-shaped by having the front end portions of the both side walls 25A connected to the front wall 25B, the unlocking-portion accommodating portion 25 is strengthened as a whole. Therefore, damage of the unlocking-portion accommodating portion 25 can also be prevented.

Since the unlocking-portion accommodating portion 25 particularly is substantially in the form of a rib projecting upward from the upper surface of the connector main body 11, the pressable portion 14D of the unlocking portion 14B can be, accordingly, formed to project upward from the upper surface of the connector main body 11. Thus, the pressable portion 14D of the unlocking portion 14B is more easily pressed. Further, since the grip 12 particularly extends obliquely downward from the rear end portion of the connector main body 11 and the unlocking-portion accommodating portion 25 is arranged at the rear end portion of the connector main body 11, the pressable portion 14D of the unlocking portion 14B can be pressed by a thumb with the grip 12 held by hand.

Accordingly, to protect an unlocking portion when a charging connector is dropped by mistake, a charging connector 10 to be connected to a vehicle-side connector 50 particularly connected to a battery in a vehicle when the battery is charged is provided with a connector main body 11 including a connector fitting portion 13 connectable to the vehicle-side connector 50, a lever 14 at least partly accommodated in the connector main body 11 and adapted to hold the vehicle-side connector 50 and the connector fitting portion 13 in a connected state by being engaged with a lock member or projection 55 provided on the vehicle-side connector 50, an unlocking portion 14B provided in or on the lever 14 and capable of canceling a locked state of a lock portion 31 and the lock projection 55, and an unlocking-portion accommodating portion 25 formed at a position of the connector main body 11 substantially corresponding to the unlocking portion 14B and including at least one pair of side walls 25A arranged to face substantially opposite side surface portions of a pressable portion 14D to be pressed at the time of an unlocking operation.

### <Second Embodiment>

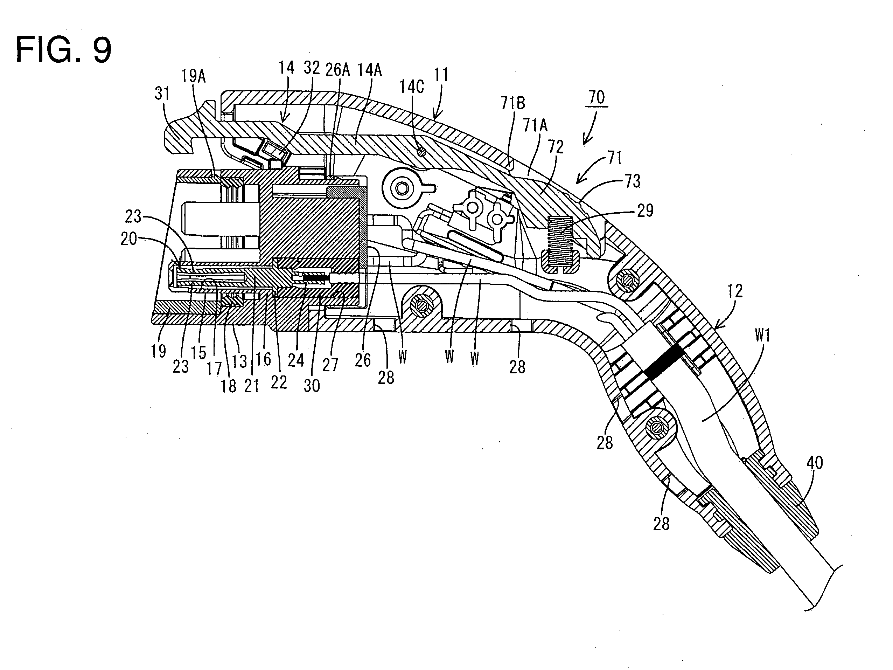

Next, a second particular embodiment of the present invention is described with reference to FIG. 9. A charging connector 70 of the second embodiment is obtained by partly changing the construction of the unlocking-portion accommodating portion 25 of the charging connector 10 of the first embodiment and the other constructions, functions and effects thereof are not described since being similar or substantially same to those of the first embodiment. The similar or substantially same constructions as in the first embodiment are identified by the same reference numerals.

An unlocking-portion accommodating portion 71 of this embodiment is so provided as not to project outward or upward from (particularly an upper or outer inclined surface of) a connector main body 11 unlike the unlocking-portion accommodating portion 25 of the first embodiment as shown in FIG. 9. In other words, the unlocking-portion accommodating portion 71 is an inner peripheral wall of a hole formed in (particularly the upper or outer inclined surface of) the connector main body 11, and an unlocking portion 72 is at least partly accommodated in this hole. That is, the unlocking portion 72 particularly is arranged to substantially face the back side of the charging connector 10 through the hole. This unlocking-portion accommodating portion 71 includes substantially opposite side walls 71 A and/or a front wall 71B of the inner peripheral wall of the hole. Thus, the unlocking portion 72 of this embodiment is such that a pressable portion 73 thereof does not project upward or outward from the upper inclined surface of the connector main body 11. Since the outer contour line of the connector main body 11 can be smooth by doing so, the design of the external appearance of the charging connector 70 can be improved. Further, since the unlocking-portion accommodating portion 71 is unlikely to collide with the ground when the charging connector 70 is dropped by mistake, the unlocking-portion accommodating portion 71 can be protected.

### <Other Embodiments>

The present invention is not limited to the above described and illustrated embodiments. For example, the following embodiments are also included in the technical scope of the present invention.
(1) Although the unlocking-portion accommodating portion in which the front wall is connected to the front end portions of the both side walls is illustrated in the first embodiment, the front wall is not always necessary and the unlocking-portion accommodating portion may be composed of only the both side walls according to the present invention.
(2) Although the grip 12 is provided in the above embodiments, a charging connector may include no grip according to the present invention.

### LIST OF REFERENCE NUMERALS

| | | | |
|---|---|---|---|
| 10, 70... | | charging connector | |
| 11 | ... | connector main body (case body) | |
| 12 | ... | grip (case body) | |
| 13 | ... | connector fitting portion | |
| 14 | ... | lever | |
| 14B, 72 | | ... | unlocking portion |
| 14D, 73 | | ... | pressable portion |
| 25, 71 | ... | unlocking-portion accommodating portion | |
| 25A, 71A | | ... | side wall |
| 25B, 71B | | ... | front wall |
| 31 | ... | lock portion | |
| 50 | ... | vehicle-side connector | |
| 55 | ... | lock projection (lockable portion) | |

## Claims

1. A charging connector (10; 70) connectable to a vehicle-side connector (50) connected to a battery in a vehicle when the battery is charged, comprising:
a case body (11, 12) including a connector fitting portion (13) connectable to the vehicle-side connector (50),
a lever (14) at least partly accommodated in the case body (11, 12), including a lock portion (31) engageable with a lockable portion (55) provided on the vehicle-side connector (50) and adapted to hold the vehicle-side connector (50) and the connector fitting portion (13) in a connected state by the engagement of the lock portion (31) and the lockable portion (55),
an unlocking portion (14B; 72) provided in or on the lever (14) and capable of canceling a locked state of the lock portion (31) and the lockable portion (55), and
an unlocking-portion accommodating portion (25; 71) formed at a position of the case body (11, 12) substantially corresponding to the unlocking portion (14B; 72) and including a pair of side walls (25A; 71 A) arranged to substantially face opposite side surface portions of a pressable portion (14D; 73) to be pressed at the time of an unlocking operation.

2. A charging connector according to claim 1, wherein the unlocking portion accommodating portion (25; 71) includes a front wall (25B; 71B) arranged to substantially face a front surface portion of the pressable portion (14D; 73).

3. A charging connector according to claim 2, wherein the front wall (25B; 71B) is connected to front end portions of the pair of side walls (25A; 71 A).

4. A charging connector according to any one of the preceding claims, wherein the unlocking-portion accommodating portion (25) is in the form of a rib projecting from an outer surface of the case body (11, 12).

5. A charging connector according to any one of the preceding claims, wherein the pressable portion (14D) of the unlocking portion (14B) projects from the outer surface of the case body (11, 12) to such an extent as not to reach beyond an outer edge of the unlocking-portion accommodating portion (25).

6. A charging connector according to any one of the preceding claims 1 to 3, wherein the unlocking-portion accommodating portion (71) is an inner peripheral wall of a hole formed in an outer surface of the case body (11, 12).

7. A charging connector according to claim 6, wherein the unlocking portion faces the back side of the case body through the hole.

8. A charging connector according to any one of the preceding claims, wherein the case body (11, 12) includes a connector main body (11) substantially extending in a connecting direction with the vehicle-side connector (50) and a grip (12) extending from a rear end portion of the connector main body (11) in a direction crossing the connecting direction.

9. A charging connector according to claim 8, wherein the unlocking portion (14B; 72) is provided near a boundary between the connector main body (11) and the grip (12).

10. A charging connector according to any one of the preceding claims, wherein the lever (14) includes an arm (14C) extending from the interior of the case body to the front end portion of the connector fitting portion (13) and adapted to hold the vehicle-side connector (50) and the connector fitting portion (13) in a connected state.

11. A charging connector according to claim 10, wherein the lever (14) is displaceable in a seesaw manner with a lever pivot portion arranged at an intermediate position of the arm (14C) as a pivot point.

12. A charging connector according to any one of the preceding claims, wherein the lock portion (31) is displaceable between a locking position where the lock portion (31) and the lockable portion (55) provided on the vehicle-side connector (50) are in a locked state and an unlocking position where the locked state is canceled.

13. A charging connector according to claim 12, wherein the lever (14) at the locking position is in contact with a shock absorbing member (32).
